# EUROPEAN PATENT APPLICATION

(11) **EP 0 661 186 A1**
(43) Date of publication of application: **05.07.1995**
(21) Application number: 94119122.3
(22) Date of filing: 05.12.1994
(51) Int. Cl.: B60K 11/04, F01P 11/10, F04D 29/64, F24F 1/00

(54) **A mounting for a motor, particularly an electric motor for a fan associated with a heat-exchanger**

(30) Priority: 28.12.1993 IT TO931004
(71) Applicant: BORLETTI CLIMATIZZAZIONE S.r.l., I-10046 Poirino (Torino) (IT)
(72) Inventor: Cristante, Luigi, I-10091 Alpignano (Torino) (IT)
(74) Representative: Marchitelli, Mauro

(57) **Abstract**

A mounting frame (T, S) for an electric fan (M, V) associated with a heat-exchanger (R) is composed of two pieces, a frame (T) and a star-shaped motor mounting (S) for fitting on the frame (T); interchangeability of various motors (M) on the same frame (T) can thus be achieved cheaply by the differentiation solely of the corresponding motor mountings (S), with low costs.

## Description

The present invention relates in general to mountings for electric motors and, more specifically, to a mounting for an electric motor which drives a fan associated with a heat-exchanger. Heat-exchangers with electric fans are very widespread, for example, in the automotive field and, typically, are used for cooling a liquid.

It is known in the art to produce a mounting frame for fixing to a heat-exchanger, for example, by means of bolts or screws, the frame comprising a seat which is formed in a body connected to the structure of the frame by spokes, and which can house the electric motor. It is known to make these mounting frames in plastics , by injection moulding, and as single pieces, in order to limit costs.

This gives rise to a technical problem since, in the automotive field in particular, different electric motors often have to be associated with the same heat-exchanger. This means that it is necessary to design and produce different mounting frames for each of the motors to be associated with a given heat-exchanger. This is economically disadvantageous since the cost of manufacturing a die to produce a mounting frame is extremely high, given the structural complexity of the frames.

The object of the present invention is to provide a mounting which solves all the problems indicated above in a satisfactory manner.

According to the present invention, this object is achieved by virtue of a mounting having the characteristics indicated in the claims which follow the present description.

Further advantages and characteristics of the present invention will become clear from the following detailed description, given with the aid of the appended drawings, provided by way of non-limiting example, in which:
Figure 1 is a schematic front view of a mounting according to the present invention, fitted on a heat-exchanger,
Figure 2 is a schematic representation of the device shown in Figure 1, seen from above and partially in section,
Figure 3 is a schematic view of a detail of the device of Figure 1 shown partially in section,
Figure 4 is another schematic view, partially in section, of a detail of an alternative embodiment of the device according to the present invention.

The device according to the present invention consists, essentially, of a mounting frame composed of two distinct pieces which enable the motors for driving a fan associated with the heat-exchanger to be interchanged cheaply.

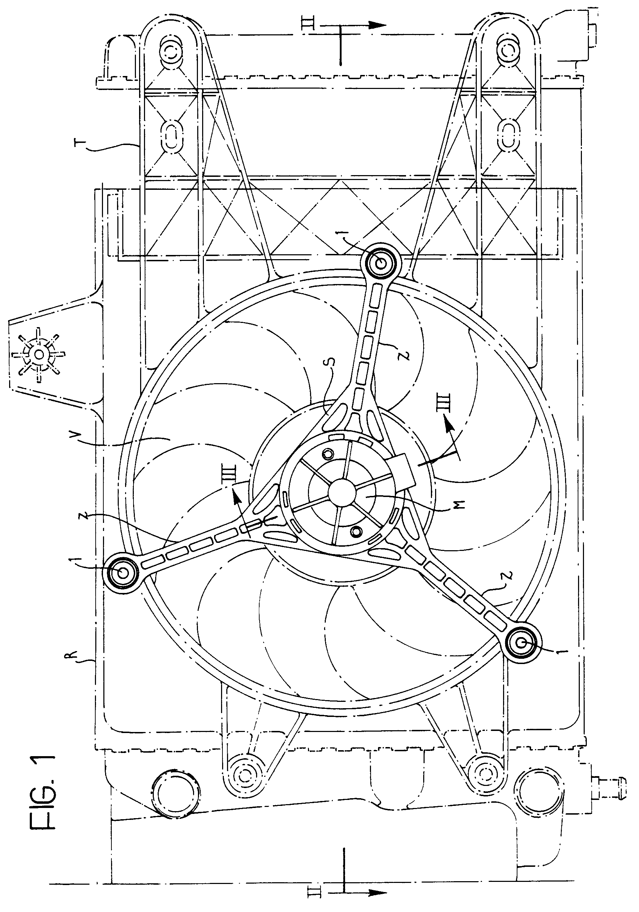

Figure 1 is a front view of a heat-exchanger R which, in the specific embodiment, is a motor-vehicle radiator, on which a mounting frame according to the invention is fitted. The mounting frame, which is fixed to the heat-exchanger R in conventional manner, is composed of two distinct pieces, that is, a frame, indicated T in the drawing , and a motor mounting, indicated S, which in turn is fitted on the frame T. The frame T is made as a single piece by injection moulding, as is the motor mounting S. Typically, a plastics material is used.

As can be seen, the frame T comprises brackets, or arms for fixing to the heat-exchanger R and a circular moulding for housing a fan V, all in a manner substantially similar to the prior art. The frame T also comprises means for the fitting of the motor mounting S, the means, in the specific embodiment, being seats or holes for screws or bolts.

The motor mounting S comprises a central body in which a substantially cylindrical seat is formed for housing an electric motor M driving a fan V, and from which three arms or spokes Z extend. The motor mounting S is fitted on the frame T by the fixing of the ends of the spokes Z to the circular moulding of the frame T. The ends of the spokes Z are therefore formed in a manner such that they can be fixed in cooperation with corresponding fixing means provided on the circular moulding of the frame T. This fixing is typically effected by means of screws or bolts 1, although alternative methods according to the prior art are possible.

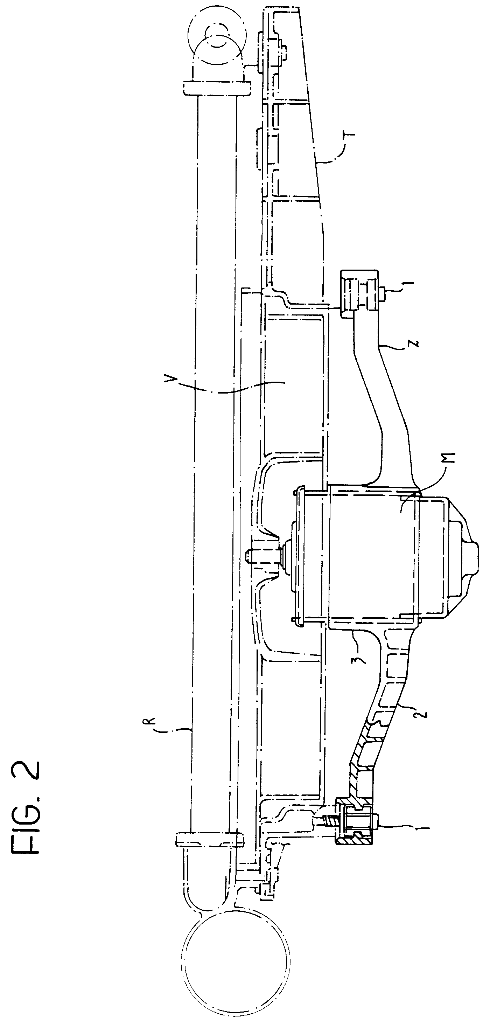

Figure 2 shows the device shown in Figure 1, schematically from above and partially in section, for a better understanding of the arrangement.

The device according to the invention thus allows different electric motors M to be fitted on the same heat-exchanger R, the frame T remaining unchanged . Naturally, for each different electric motor M, it is necessary to use a corresponding, different, motor mounting S having a seat adapted to house the respective motor M. The shape and configuration of the ends of the spokes Z are common to the various motor mountings S, however, so that each of them can be mounted on the same frame T in exactly the same way. For one heat-exchanger R, it is therefore necessary to produce a single frame T, and a different motor mounting S for each of the motors to be associated with the heat-exchanger R.

Given that the motor mounting S is a fairly simple element, the cost of manufacturing the die,for producing it,is low. The solution according to the invention is therefore decidedly cheaper than the solution according to the prior art which provides for the production of several complete mounting frames as single pieces, that is, a complete mounting frame for each of the motors M. The cost of manufacturing a die for producing a mounting frame as a single piece is, in fact, very high.

The solution according to the invention also becomes particularly advantageous when it is possible to arrange for a given set of motor mountings S to be compatible, not with a single frame T, but with several different frames T. In this case, in fact, the modularity of the solution according to the invention permits even greater savings.

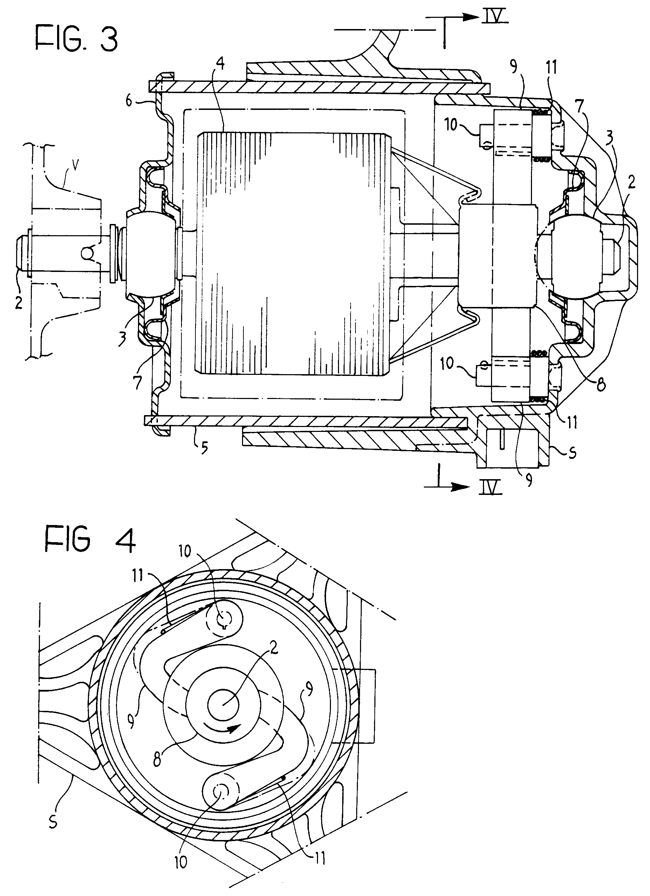

Moreover, in a currently-preferred embodiment, the motor mounting S forms part of the outer casing of the motor M. Figure 3 shows, partially in section, the central body of the motor mounting S carrying a motor M according to this latter specific embodiment. The motor M comprises a motor shaft 2 on which a conventional rotor 4 with laminations, and a commutator 8, are keyed. The stator portion of the motor M, however, comprises an outer casing or housing 5 which is fitted directly in the seat in the motor mounting S. The mounting S in fact forms one of the two caps of the motor M, in the specific embodiment, the cap which carries the so-called brushes 9 which supply the motor M by sliding contact with the commutator 8, and part of the outer casing of the motor M. This portion of the motor mounting S therefore comprises a seat for housing a bush 3, made of self-lubricating material, for supporting one end of the motor shaft 2 for rotation.

The bush 3 may, for example, be fixed by means of an annular element 7, for example, of stamped sheet-metal, which is also forced into a seat formed in the end wall of the motor mounting S and has a frusto-conical inner surface substantially corresponding to the outer surface of the bush 3. The annular element 7 thus urges the bush 3 against the corresponding seat in the motor mounting S, centring it and thus locking it in position. The end wall of the seat in the motor mounting S also has two pins 10 carrying the two motor brushes 9 with the corresponding springs 11 for urging the brushes 9 against the commutator 8. This known configuration of the brushes 9 is preferred since it is compact because the brushes 9 have to be of a generous size since they are subject to wear.

The opposite end of the casing of the motor M, however, is formed in conventional manner by a cap, or wall 6, fitted on the housing 5. The cap 6 carries a bush 3 which is fitted by the same system as the bush 3 at the other end of the shaft 2, that is, by a further annular element 7 operating in a substantially identical manner. The fan V is keyed to the portion of the motor shaft 2 which projects from the cap 6. For a better understanding, Figure 4 shows, partially in section, a detail of the arrangement of the brushes 9.

As can be seen, this embodiment enables the casing of the motor M to be integrated to a considerable extent with the motor mounting S, thus permitting the production of a simple and very cheap device which, at the same time, is strong and reliable. Typical applications of the present invention are the radiators and heat-exchangers of motor-vehicle heating and/or air-conditioning systems.

Naturally, the principle of the invention remaining the same, the details of construction and forms of embodiment may be varied widely with respect to those described and illustrated, without thereby departing from the scope of the present invention.

## Claims

1. A mounting for connecting a motor (M), carrying a fan (V), to a heat-exchanger (R), characterized in that the mounting comprises:
- first mounting means (T) for connection to the heat-exchanger (R),
- second mounting means (S) having a seat for housing the motor (M), and connectible to the first mounting means (T).

2. A device according to Claim 1, in which the motor is an electric motor (M) and the heat-exchanger is a heat-exchanger (R) for fitting in a vehicle, characterized in that the first mounting means (T) have fixing means of predetermined shape and configuration such that the first mounting means (T) can be connected to a plurality of different second mounting means (S), all of the various second mounting means (S) comprising fixing means of predetermined shape and configuration corresponding to the fixing means of the first mounting means (T).

3. A device according to Claim 2, characterized in that the various second mounting means (S) are configured for housing different motors (M).

4. A device according to Claim 3, characterized in that the second mounting means (S) can be connected to the first mounting means (T) by screw means (1).

5. A device according to Claim 4, characterized in that the screw means comprise bolts (1).

6. A device according to Claim 5, characterized in that the first mounting means (T) comprise a substantially circular opening and the second mounting means (S) comprise a central body which carries the seat for housing the motor (M) and at least two connection elements (Z) the ends of which have the fixing means, the second mounting means (S) being formed in a manner such that, in the assembled condition, the fan is positioned substantially within the circular opening in the first mounting means (T).

7. A device according to Claim 6, characterized in that there are at least three connecting elements (Z) and the second mounting means (S) are substantially star-shaped.

8. A device according to any one of the preceding claims, characterized in that the first and second mounting means (T, S) are made of plastics material.

9. A device according to Claim 8, characterized in that the first and second mounting means (T, S) are produced by injection moulding.

10. A device according to Claim 8 or Claim 9, characterized in that the seat in the second mounting means (S) is formed in a manner such that it constitutes at least part of the casing of the motor (M).

11. A device according to Claim 10, characterized in that the seat forms at least one cap of the motor (M).

12. A device according to Claim 10 or Claim 11, characterized in that conductor means (9) for supplying the motor (M) are provided in the seat.

13. A device according to Claim 12, characterized in that the conductor means are brushes (9) forming sliding contacts with a commutator (8) of the motor (M).

14. A device according to Claim 13, characterized in that the seat comprises pins (10) for supporting the brushes (9) for rotation, the brushes (9) being substantially L-shaped and having resilient means (11) for keeping the brushes (9) in contact with the commutator (8) by rotation on the pins (10).

15. A device according to any one of Claims 10 to 14, characterized in that there is at least one bearing element (3) in the seat for supporting the shaft (2) of the motor (M) for rotation.
